# EUROPEAN PATENT SPECIFICATION

(11) **EP 2 455 426 B1**
(45) Date of publication and mention of the grant of the patent: **06.01.2021**
(21) Application number: 11186686.9
(22) Date of filing: 26.10.2011
(51) Int. Cl.: C08L 69/00, C08L 83/10, C08L 33/04, C08G 77/448, C08L 83/00, C08L 83/04

(54) **POLYCARBONATE RESIN COMPOSITION HAVING HIGH GLOSS AND IMPACT RESISTANCE AND GOOD SURFACE PROPERTIES, AND MOLDED ARTICLE USING THE SAME**
POLYCARBONATHARZZUSAMMENSETZUNG MIT HOHEM GLANZ UND SCHLAGBESTÄNDIGKEIT UND GUTEN OBERFLÄCHENEIGENSCHAFTEN SOWIE GEFORMTER ARTIKEL DAMIT
COMPOSITION DE RÉSINE DE POLYCARBONATE DOTÉE D'UNE RÉSISTANCE HAUTE BRILLANCE ET À RÉSISTANCE AUX IMPACTS ET DE BONNES PROPRIÉTÉS DE SURFACE, ET ARTICLE MOULÉ L'UTILISANT

(30) Priority: 23.11.2010 KR 20100116919
(43) Date of publication of application: 23.05.2012
(73) Proprietor: Lotte Advanced Materials Co., Ltd., Yeosu-si Jeollanam-do (KR)
(72) Inventor: Ha, Doo Han, Uiwang-si, Gyeonggi-do (KR); Kwon, Young Chul, Uiwang-si, Gyeonggi-do (KR)
(74) Representative: Lang, Johannes

(56) References cited:
- EP-A1- 1 533 340
- EP-A1- 1 555 296
- EP-A2- 0 387 570
- WO-A1-2004/074885
- GB-A- 2 057 464
- US-A- 3 686 355
- US-A1- 2005 101 757
- US-A1- 2009 318 629
- SUNG-RYONG KIM ET AL: "Effect of silicone oil on the morphology and properties of polycarbonate", JOURNAL OF APPLIED POLYMER SCIENCE, vol. 109, no. 6, 15 September 2008 (2008-09-15), pages 3439-3446, XP055060168, ISSN: 0021-8995, DOI: 10.1002/app.28468
- Anonymous ET AL: "Phenyl methyl silicone,63148-58-3", , 1 January 2010 (2010-01-01), XP055283178, Retrieved from the Internet: URL:http://www.rljchem.com/template/pro1_1 7_en.html [retrieved on 2016-06-23]
- XIAOJUAN HAO ET AL: "High refractive index polysiloxane as Injectable,curable accommodating intraocular lens", BIOMATERIALS, ELSEVIER SCIENCE PUBLISHERS BV., BARKING, GB, vol. 33, no. 23, 21 April 2012 (2012-04-21), pages 5659-5671, XP028507865, ISSN: 0142-9612, DOI: 10.1016/J.BIOMATERIALS.2012.04.052 [retrieved on 2012-04-26]
- KASAROVA STEFKA NIKOLOVA ET AL: "Analysis of the dispersion of optical plastic materials", OPTICAL MATERIALS, vol. 29, no. 11, 1 January 2007 (2007-01-01), pages 1481-1490, XP029185443, ISSN: 0925-3467, DOI: 10.1016/J.OPTMAT.2006.07.010

## Description

The present invention relates to a polycarbonate resin composition having high gloss and impact resistance and good surface properties, and a molded article using the same. More particularly, the present invention relates to a polycarbonate resin composition having high gloss and impact resistance that minimizes surficial friction while maintaining transparency to have excellent mar resistance, that is, resistance to fine scratches, and a molded article using the same.

Polycarbonate resins have excellent toughness, impact resistance, heat stability, self-extinguishability, dimensional stability and heat resistance, and thus are used for electric and electronic components, automobile components, lenses, and as an alternative to glass. However, in application to products requiring transparency, polycarbonate resins have inferior scratch resistance to glass and become yellow when exposed to sunlight for long time.

Thus, there is suggested a method of blending a polycarbonate resin with a poly(methyl methacrylate) (PMMA) resin having excellent scratch resistance. However, due to low compatibility and remarkable difference in refractive index between the polycarbonate resin and the PMMA resin, an alloy thereof is opaque and has low quality in terms of external appearance, impact resistance and scratch resistance.

Recently, a separate coating process is used to impart scratch resistance and high gloss texture. However, the coating process requires a plurality of stages, generates defects and toxic volatile components, and increases manufacturing costs.

In order to solve such problems, non-coating materials have been developed. As non-coating materials, it is necessary for the materials to realize intrinsic high-gloss texture and intrinsic scratch resistance. However, resins having all desired properties, such as color reproducibility, impact resistance, heat resistance, and scratch resistance, have not been developed yet.

Patent document EP 0 387 570 A2 relates to blends of polydiorganosiloxane-polycarbonate block cocondensates, graft polymers and/or rubber-elastic polymers, characterised by containing phenyl group-containing, low-molecular-weight polysiloxanes, and containing further conventional additives.

The inventors of the present invention developed a resin composition including a polycarbonate resin, a polycarbonate-polysiloxane, and a modified (meth)acrylic copolymer to solve such problems. However, the resin composition is satisfactory in terms of scratch resistance, chemical resistance and impact resistance, but has inferior mar resistance, that is, resistance to fine scratches. Thus, the resin composition has limitations in application to components frequently touched or vulnerable to contamination.

Thus, there is a need for development of non-coating materials which intrinsically realize high-gloss texture, have general scratch resistance and mar resistance, that is, resistance to fine scratches, and exhibit excellent impact resistance, light resistance, heat resistance and chemical resistance.

It is the object of the present invention to provide a high gloss and high impact resistant polycarbonate resin composition having good surface properties; superior scratch resistance, excellent mar resistance and exhibiting high gloss texture while maintaining transparency.

This object has been achieved by the finding of a composition according to present claim 1 including 100 parts by weight of a base resin including a polycarbonate resin (A) and a polycarbonate-polysiloxane copolymer (B); and 0.1 to 10 parts by weight of polyalkylaryl siloxane (C) having a repeat unit represented by Formula 3 and a refractive index of 1.42 to 1.59.

The polyalkylaryl siloxane (C) may have a weight average molecular weight of 400 to 1,000 g/mol.

The polyalkylaryl siloxane (C) may have a viscosity of 20 to 120 mPa·s at 25°C.

The polycarbonate resin (A) is present in an amount of 30 to 90 wt% based on 100 wt% of the base resin.

In another embodiment, the polycarbonate-polysiloxane copolymer (B) may include 1 to 99 wt% of a polycarbonate block and 1 to 99 wt% of a polysiloxane block.

The base resin may further include 40 wt% or less of a modified (meth)acrylic copolymer resin. The modified (meth)acrylic copolymer resin may have a refractive index of 1.495 to 1.590.

The modified (meth)acrylic copolymer resin may have a weight average molecular weight of 5,000 to 50,000 g/mol.

The modified (meth)acrylic copolymer resin may be an aromatic or alicyclic (meth)acrylate polymer.

The modified (meth)acrylic copolymer resin may be a polymer including 20 to 100 wt% of an aromatic or alicyclic (meth)acrylate (d1) and 0 to 80 wt% of a monofunctional unsaturated monomer (d2).

The monofunctional unsaturated monomer (d2) may include at least one selected from the group consisting of (meth)acrylic acid esters, unsaturated carboxylic acid, acid anhydrides, hydroxyl group containing ester, amides, nitriles, allyl glycidyl ether, glycidyl methacrylate, and a styrene monomer.

In one embodiment, the polycarbonate resin composition may further include a fatty acid amide surface conditioning agent. The fatty acid amide surface conditioning agent may be present in an amount of 0.1 to 5 parts by weight based on 100 parts by weight of the base resin.

In one embodiment, the polycarbonate resin composition may further include syndiotactic polystyrene. The syndiotactic polystyrene may be present in an amount of 5 parts by weight or less based on 100 parts by weight of the base resin.

The resin composition may further include additives, such as an antimicrobial agent, a heat stabilizer, an antioxidant, a releasing agent, a photostablizer, an inorganic additive, a surfactant, a coupling agent, a plasticizer, an admixture, a stabilizer, a lubricant, an anti-static agent, a toning agent, a fire-proofing agent, a weather-proofing agent, a coloring agent, a UV absorbent, a UV blocking agent, a flame retardant, fillers, a nucleating agent, adhesion aids, and adhesives, which may be used alone or as mixtures.

The polycarbonate resin composition may have a total light transmittance of 80 % or more, a haze of 10.0 or less, and a blackness (Lb) of 28 or less.

Another aspect of the present invention provides a molded article using the polycarbonate resin composition.

The above and other aspects, features and advantages of the invention will become apparent from the following detailed description in conjunction with the accompanying drawing, in which:

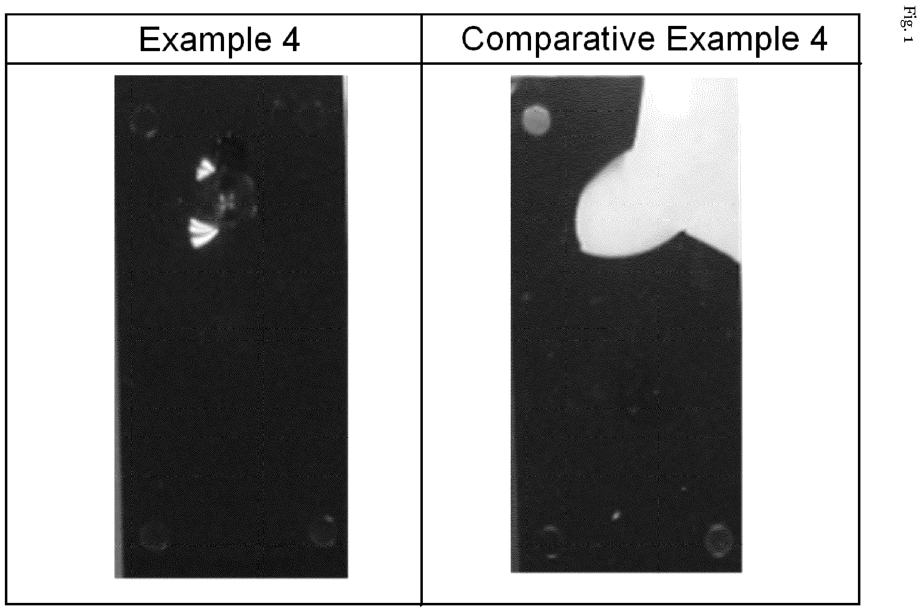

Fig. 1 is a photograph of specimens according to Example 4 and Comparative Example 4 after a gate impact test.

Exemplary embodiments will now be described in detail hereinafter with reference to the accompanying drawing; however, they may be embodied in different forms and should not be construed as limiting the present invention. Rather, these embodiments are provided so that this disclosure will be thorough and complete, and will fully convey the scope of the invention to those skilled in the art.

Herein, "(meth)acrylate" collectively includes "acrylate" and "methacrylate" unless otherwise indicated.

Further, unless otherwise indicated, "substitution" means that a hydrogen atom of a compound is substituted by a halogen atom, such as F, Cl, Br, and I, a hydroxyl group, a nitro group, a cyano group, an amino group, an azido group, an amidino group, a hydrazino group, a hydrazono group, a carbonyl group, a carbamyl group, a thiol group, an ester group, a carboxyl group or salt thereof, a sulfonic acid group or salt thereof, a phosphate group or salt thereof, a C1 to C20 alkyl group, a C2 to C20 alkenyl group, a C2 to C20 alkynyl group, a C1 to C20 alkoxy group, a C6 to C30 aryl group, a C6 to C30 aryloxy group, a C3 to C30 cycloalkyl group, a C3 to C30 cycloalkenyl group, a C3 to C30 cycloalkynyl group, or a substituent of a combination thereof.

One aspect of the present invention provides a polycarbonate resin composition including a polycarbonate resin (A), a polycarbonate-polysiloxane copolymer (B), and a polyalkylaryl siloxane (C).

A base resin includes resin components except for the polyalkylaryl siloxane (C).

In one embodiment, the base resin may include the polycarbonate resin (A) and the polycarbonate-polysiloxane copolymer (B).

In one embodiment, the base resin may include the polycarbonate resin (A), (B) the polycarbonate-polysilane copolymer, and (D) a modified (meth)acrylic copolymer resin.

Hereinafter, each component will be described in detail.

### (A) Polycarbonate resin

The polycarbonate resin may be prepared by reaction of diphenols represented by Formula 1 with phosgene, halogen acid ester, carbonic acid ester, or combination thereof. 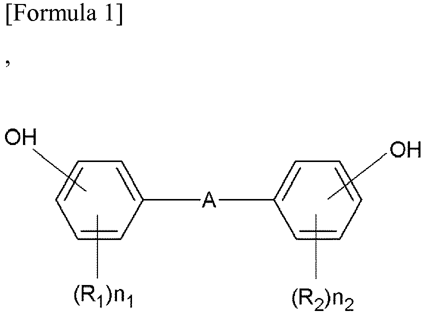 where A represents a single bond and is a substituted or unsubstituted C1 to C30 linear or branched alkylene group, a substituted or unsubstituted C2 to C5 alkenylene group, a substituted or unsubstituted C2 to C5 alkylidene group, a substituted or unsubstituted C1 to C30 linear or branched haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 linear or branched alkoxylene group, a halogen acid ester group, a carbonic acid ester group, CO, S, or SO2; R1 and R2 are the same or different and independently represent a substituted or unsubstituted C1 to C30 alkyl group or a substituted or unsubstituted C6 to C30 aryl group; and n1 and n2 each represent an integer from 0 to 4.

The polycarbonate resin may have a repeat unit by combining at least two kinds of diphenols represented by Formula 1. Examples of the diphenols may include hydroquinone, resorcinol, 4,4'-dihydroxy diphenyl, 2,2-bis(4-hydroxyphenyl)propane (bisphenol A), 2,4-bis(4-hydroxyphenyl)-2-methylbutane, bis(4-hydroxyphenyl)methane, 1,1-bis(4-hydroxypehnyl)cyclohexane, 2,2-bis(3-chloro-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxphenyl)ketone, and bis(4-hydroxyphenyl)ether. Here, 2,2-bis(4-hydroxyphenyl)propane, 2,2-bis(3-chloro-4-hydroxyphenyl)propane and 1,1-bis(4-hydroxypehnyl)cyclohexane are preferably used, and 2,2-bis(4-hydroxyphenyl)propane is more preferable.

The polycarbonate resin may have a weight average molecular weight of 10,000 to 200,000 g/mol. In one embodiment, the polycarbonate resin may have a weight average molecular weight of 15,000 to 80,000 g/mol, without being limited thereto.

The polycarbonate resin may be a mixture of copolymers prepared from at least two kinds of diphenols. Further, the polycarbonate resin may include a linear polycarbonate resin, a branched polycarbonate resin, and a polyester-carbonate copolymer resin.

Examples of the linear polycarbonate resin may include bisphenol A polycarbonate resins. Examples of the branched polycarbonate resin may include compounds prepared by reaction of a multifunctional aromatic compound, such as trimelitic anhydride and trimelitic acid, with diphenols and carbonate. The multifunctional aromatic compound may be present in an amount of 0.05 to 2 mol% based on the total amount of the branched polycarbonate resin. Examples of the polyester-carbonate copolymer resin may include compounds prepared by reaction of a bifunctional carboxylic acid with diphenols and carbonate. Examples of the carbonate may include diaryl carbonate, such as diphenyl carbonate, and ethylene carbonate.

The polycarbonate resin may have a melt flow index (MFI) of 3 to 120 g/10min at 310°C and 1.2 kgf.

The polycarbonate resin is present in an amount of 30 to 90 wt% based on 100 wt% of the base resin. Within this range, excellent property balance between impact strength, heat resistance, and processibility can be obtained. In one embodiment, the amount may be 50 to 80 wt% in the base resin.

### (B) Polycarbonate-polysiloxane copolymer

The polycarbonate-polysiloxane copolymer includes a polycarbonate block and a polysiloxane block.

The polycarbonate block may include a structural unit derived from the polycarbonate resin (A).

The polysiloxane block may include a structural unit represented by Formula 2: 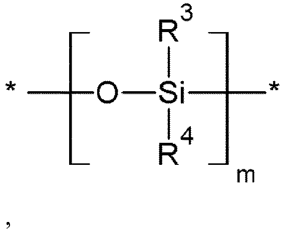 where R³ and R⁴ may be the same or different and independently represent a hydrogen atom, a substituted or unsubstituted C1 to C20 alkyl group, a substituted or unsubstituted C2 to C20 alkenyl group, a substituted or unsubstituted C2 to C20 alkynyl group, a substituted or unsubstituted C1 to C20 alkoxy group, a substituted or unsubstituted C3 to C30 cycloalkyl group, a substituted or unsubstituted C3 to C30 cycloalkenyl group, a substituted or unsubstituted C3 to C30 cycloalkynyl group, a substituted or unsubstituted C6 to C30 aryl group, a substituted or unsubstituted C6 to C30 aryloxy group, or NRR' (R and R' may be the same or different and represent a hydrogen atom or a substituted or unsubstituted C1 to C20 alkyl group), and 2 ≤ m<10,000.

In Formula 2, m may be in a range from 2 to 10,000. In one embodiment, m may be in a range from 2 to 1,000. Within this range, excellent impact resistance can be obtained and proper viscosity can be maintained, providing favorable conditions for extrusion. Specifically, m may be 10 to 100, preferably 25 to 80.

The polycarbonate-polysiloxane copolymer may include 1 to 99 wt% of the polycarbonate block and 1 to 99 wt% of the polysiloxane block. In one embodiment, the polycarbonate-polysiloxane copolymer may include 40 to 80 wt% of the polycarbonate block and 20 to 60 wt% of the polysiloxane block. Within this range, excellent impact resistance can be obtained. In another embodiment, the polycarbonate-polysiloxane copolymer may include 80 to 95 wt% of the polycarbonate block and 5 to 20 wt% of the polysiloxane block.

The polycarbonate-polysiloxane copolymer may have a weight average molecular weight of 10,000 to 30,000 g/mol, specifically 15,000 to 22,000 g/mol. Within this range, excellent impact resistance can be obtained.

The polycarbonate-polysiloxane copolymer may reinforce the impact resistance of the polycarbonate resin composition which is reduced due to use of the modified (meth)acrylic copolymer.

The polycarbonate-polysiloxane copolymer may be present in an amount of 1 to 99 wt%, preferably 10 to 60 wt% based on 100 wt% of the base resin. Within this range, excellent property balance between impact strength, heat resistance, and processibility can be obtained. Specifically, the amount may be 20 to 50 wt%. In one embodiment, a content ratio between the polycarbonate resin (A) and the polycarbonate-polysiloxane copolymer (B) may be 1:1 to 5:1, specifically 1:1 to 3:1.

### (C) Polyalkylaryl siloxane

The polyalkylaryl siloxane serves as a surface conditioning agent, which minimizes friction. The polyalkylaryl siloxane has a repeat unit represented by Formula 3: 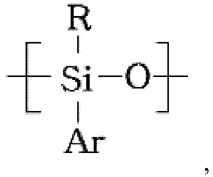 where R represents a substituted or unsubstituted C1 to C6 alkyl group, and Ar represents a substituted or unsubstituted C6 to C12 aryl group.

The polyalkylaryl siloxane has a refractive index of 1.42 to 1.59, preferably 1.47 to 1.59, and more preferably 1.49 to 1.59. Within this range, excellent property balance between transparency and mar resistance can be obtained. In one embodiment, the polyalkylaryl siloxane may have a refractive index of 1.49 to 1.58, preferably 1.495 to 1.55.

The polyalkylaryl siloxane (C) may have a weight average molecular weight of 400 to 1,000 g/mol, preferably 600 to 800 g/mol. Within this range, a bleed-out phenomenon does not occur on the surface and the polyalkylaryl siloxane moves to the surface.

In one embodiment, the polyalkylaryl siloxane (C) may have a viscosity of 20 to 120 mPa·s, preferably 30 to 100 mPa·s at 25°C. Within this range, a bleed-out phenomenon does not occur on the surface and the polyalkylaryl siloxane moves to the surface.

The polyalkylaryl siloxane (C) may include fluid-type polyalkylaryl siloxane.

Examples of the polyalkylaryl siloxane (C) may include, without being limited to, polymethylphenyl siloxane, polyethylphenyl siloxane, polypropylphenyl siloxane, polybutylphenyl siloxane, polypentylphenyl siloxane, and polyhexylphenyl siloxane. Specifically polymethylphenyl siloxane is preferably used.

The polyalkylaryl siloxane (C) is present in an amount of 0.1 to 10 parts by weight based on 100 parts by weight of the base resin. When the amount of the polyalkylaryl siloxane (C) is less than 0.1 parts by weight, sufficient mar resistance cannot be obtained. When the amount of the polyalkylaryl siloxane (C) is more than 10 parts by weight, haze becomes. Specifically, of the polyalkylaryl siloxane (C) may be present in an amount of 1 to 7 parts by weight, e.g., 1, 1.5, 2, 2.5, 3, 3.5, 4, 4.5, 5, 5.5, 6, 6.5, and 7 parts by weight.

### (D) Modified (meth)acrylic copolymer resin

The modified (meth)acrylic copolymer resin (D) may be added to the base resin.

The modified (meth)acrylic copolymer resin (D) may be a polymer of an aromatic or alicyclic (meth)acrylate. In one embodiment, the modified (meth)acrylic copolymer resin (D) may be a homopolymer of an aromatic or alicyclic (meth)acrylate. In another embodiment, the modified (meth)acrylic copolymer resin (D) may be a copolymer using at least two kinds of aromatic or alicyclic (meth)acrylates. In another embodiment, the modified (meth)acrylic copolymer resin (D) may be a copolymer of aromatic or alicyclic (meth)acrylate and a monomer polymerizable therewith. In another embodiment, the modified (meth)acrylic copolymer resin (D) may be a mixture of at least two of the above modified (meth)acrylic copolymer resins.

Specifically, the modified (meth)acrylic copolymer resin (D) may be a polymer including 20 to 100 wt% of aromatic or alicyclic (meth)acrylate (D1) and 0 to 80 wt% of a monofunctional unsaturated monomer (D2). More specifically, the modified (meth)acrylic copolymer resin (D) may be a polymer including 20 to 99.9 wt% of the aromatic or alicyclic (meth)acrylate (D1) and 0.1 to 80 wt% of the monofunctional unsaturated monomer (D2). Within this range, the modified (meth)acrylic copolymer resin may have an average refractive index of 1.495 or more. In one embodiment, the modified (meth)acrylic copolymer resin (D) may be a polymer including 25 to 45 wt% of the aromatic or alicyclic (meth)acrylate (D1) and 55 to 75 wt% of the monofunctional unsaturated monomer (D2).

The aromatic or alicyclic (meth)acrylate (D1) refers to a (meth)acrylate compound substituted by an aromatic compound or an alicyclic compound.

In one embodiment, the aromatic or alicyclic (meth)acrylate (D1) may have a structure represented by Formula 4 or 5. 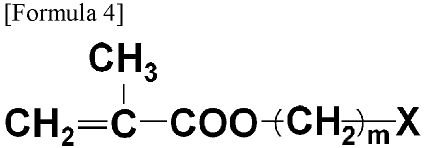 where m represents an integer from 0 to 10, and X represents a substituted or unsubstituted C6 to C30 aryl group, a substituted or unsubstituted C3 to C30 cycloalkyl group, a substituted or unsubstituted C3 to C30 cycloalkenyl group, or a substituted or unsubstituted C3 to C30 cycloalkynyl group.

In one embodiment, X may be selected from the group consisting of a cyclohexyl group, a phenyl group, a methylphenyl group, a methylethylphenyl group, a propylphenyl group, a methoxyphenyl group, a cyclohexylphenyl group, a chlorophenyl group, a bromophenyl group, a phenyphenyl group, and a benzylphenyl group. 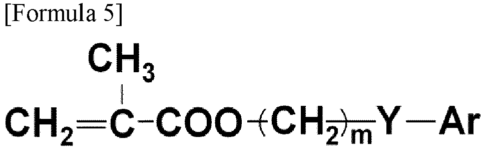 where m represents an integer from 0 to 10, Y represents oxygen O or sulfur S, and Ar represents a substituted or unsubstituted C6 to C30 aryl group, a substituted or unsubstituted C3 to C30 cycloalkyl group, a substituted or unsubstituted C3 to C30 cycloalkenyl group, or a substituted or unsubstituted C3 to C30 cycloalkynyl group.

In one embodiment, Ar may be selected from the group consisting of a cyclohexyl group, a phenyl group, a methylphenyl group, a methylethylphenyl group, a methoxyphenyl group, a cyclohexylphenyl group, a chlorophenyl group, a bromophenyl group, a phenylphenyl group, and a benzylphenyl group.

Examples of the aromatic or alicyclic acrylic compound may include cyclohexyl(meth)acrylate, ethylphenoxy(meth)acrylate, 2-ethylthiophenyl(meth)acrylate, 2-ethylaminophenyl(meth)acrylate, phenyl(meth)acrylate, benzyl(meth)acrylate, 2-phenylethyl(meth)acrylate, 3-phenylpropyl(meth)acrylate, 4-phenylbutyl(meth)acrylate, 2-2-methylphenylethyl(meth)acrylate, 2-3-methylphenylethyl(meth)acrylate, 2-4-methylphenylethyl(meth)acrylate, 2-4-propylphenylethyl(meth)acrylate, 2-(4-(1-methylethyl)phenyl)ethyl(meth)acrylate, 2-(4-methoxyphenyl)ethyl(meth)acrylate, 2-(4-cyclohexylphenyl)ethyl(meth)acrylate, 2-(2-chlorophenyl)ethyl(meth)acrylate, 2-(3-chlorophenyl)ethyl(meth)acrylate, 2-(4-chlorophenyl)ethyl(meth)acrylate, 2-(4-bromophenyl)ethyl(meth)acrylate, 2-(3-phenylphenyl)ethyl(meth)acrylate, 2-(4-benzylphenyl)ethyl(meth)acrylate, and combinations thereof. Specifically, cyclohexyl(meth)acrylate, ethylphenoxy(meth)acrylate, phenyl(meth)acrylate, or a combination thereof may be used, without being limited thereto.

A monomer copolymerizable with the aromatic or alicyclic acrylic compound may be the monofunctional unsaturated monomer (D2). Examples of the monofunctional unsaturated monomer (D2) may include, without being limited to, (meth)acrylic acid esters, unsaturated carboxylic acids, acid anhydrides, hydroxyl group containing esters, amides, nitriles, allyl glycidyl ethers, glycidyl methacrylates, and styrene monomers, which may be used alone or as mixtures.

Specifically, examples of the mono-functional unsaturated monomer may include, without being limited to, alkyl methacrylates such as methyl methacrylate, ethyl methacrylate, propyl methacrylate, and butyl methacrylate; alkyl acrylates such as methyl acrylate, ethyl acrylate, propyl acrylate, butyl acrylate, and 2-ethylhexyl acrylate; unsaturated carboxylic acids such as acrylic acid and methacrylic acid; acid anhydrides such as maleic anhydride; hydroxyl group containing acrylates such as 2-hydroxyethyl acrylate, 2-hydroxypropyl acrylate, and monoglycerol acrylate; amides such as acrylamide and methacrylamide; nitriles such as acrylonitrile and methacrylonitrile; allyl glycidyl ether; glycidyl methacrylate; styrenes such as α-methylstyrene; or combinations thereof. Specifically, alkylmethacrylates or alkylacrylates may be used, without being limited thereto.

Examples of the modified (meth)acrylic copolymer may include a copolymer of methyl methacrylate and phenyl methacrylate.

The modified (meth)acrylic copolymer may be polymerized by conventional bulk polymerization, emulsion polymerization, or suspension polymerization.

The modified (meth)acrylic copolymer may have a higher refractive index than a common acrylic polymer. That is, the modified (meth)acrylic copolymer may have the same refractive index as the polycarbonate resin. In one embodiment, the modified (meth)acrylic copolymer may have a refractive index of 1.495 to 1.590. When the modified (meth)acrylic copolymer has an increased refractive index, i.e., when the modified (meth)acrylic copolymer has a refractive index in the above range, compatibility and transparency can be improved, so that it can be well blended with the polycarbonate resin. Accordingly, the polycarbonate resin has improved scratch resistance and high transparency and is highly colored. In one embodiment, the refractive index may be 1.51 to 1.59.

In one embodiment, the modified (meth)acrylic copolymer resin (D) may have a weight average molecular weight of 5,000 to 25,000 g/mol. Within this range, the polycarbonate resin composition can exhibit high transparency. Specifically, the weight average molecular weight may be 7,000 to 20,000 g/mol.

In another embodiment, the modified (meth)acrylic copolymer resin (D) may have a weight average molecular weight of 25,000 to 50,000 g/mol. Within this range, the polycarbonate resin composition can exhibit semi-transparency, and thus is used for a material which does not require high transparency.

The modified (meth)acrylic copolymer resin (D) may be selectively added to the base resin. The modified (meth)acrylic copolymer resin (D) may be present in an amount of 40 wt% or less in the base resin. Within this range, excellent compatibility, impact resistance, and scratch resistance can be obtained. In one embodiment, the modified (meth)acrylic copolymer may be present in an amount of 10 to 30 wt% in the base resin.

In one embodiment, the polycarbonate-polysiloxane copolymer (B) and the modified (meth)acrylic copolymer resin (D) may be mixed at a weight ratio of 3:1 to 1:1. Within this range, excellent property balance between impact resistance, scratch resistance, transparency, heat resistance, fluidity, and coloring performance can be obtained.

### (E) Other additives

The polycarbonate resin composition may further include a fatty acid amide surface conditioning agent.

The fatty acid amide surface conditioning agent may be a C15 to C30 aliphatic alkyl amide. Examples of the fatty acid amide surface conditioning agent may include, without being limited to, stearamide, erucamide, oleamide, and behenamide.

The fatty acid amide surface conditioning agent may be present in an amount of 0.1 to 5 parts by weight based on 100 parts by weight of the base resin. Within this range, superior mar resistance can be obtained.

The polycarbonate resin composition may further include syndiotactic polystyrene.

Examples of the syndiotactic polystyrene may include, without being limited to, polystyrene, poly(p-methylstyrene), poly(m-methylstyrene), poly(p-ter-butylstyrene), poly(p-chlorostyrene), poly(m-chlorostyrene), poly(p-fluorostyrene), and poly(p-cyclohexylstyrene).

The syndiotactic polystyrene may be present in an amount of 5 parts by weight or less, preferably 1 to 5 parts by weight based on 100 parts by weight of the base resin. Within this range, the resin can have improved impact resistance.

The polycarbonate resin composition may further include additives, such as an anti-dripping agent, an antimicrobial, a heat stabilizer, an antioxidant, a release agent, a photostablizer, an inorganic additive, a surfactant, a coupling agent, a plasticizer, an admixture, a stabilizer, a lubricant, an anti-static agent, a toning agent, a fire-proofing agent, a weather-proofing agent, a coloring agent, a UV absorbent, a UV blocking agent, a flame retardant, fillers, a nucleating agent, adhesion aids, adhesives, or combinations thereof.

Examples of the anti-dripping agent may include polytetrafluoroethylene terephthalate. However, when the anti-dripping agent is added, transparency can be reduced. Thus, the anti-dripping agent may be present in an amount of 2 parts by weight or less, preferably 1.5 parts by weight or less, more preferably 1 part by weight or less, and even more preferably 0.8 parts by weight or less based on 100 parts by weight of the base resin. When the amount exceeds this range, transparency can be reduced.

Examples of the antioxidant may include phenol antioxidants, phosphite antioxidants, thioether antioxidants, or amine antioxidants. Examples of the release agent may include fluorine containing polymers, silicone oils, metal salts of stearic acid, metal salts of montanic acid, montanic acid ester waxes, or polyethylene waxes. Examples of the weather-proofing agent may include benzophenone or amine weather-proofing agents. Examples of the coloring agent may include dyes or pigments. Examples of the UV blocking agents may include titanium oxide (TiO2) or carbon black, wherein the carbon black may be a conductive carbon black, such as graphitized carbon, furnace black, acetylene black and ketchen black, without being limited thereto. Examples of the filler may include glass fiber, carbon fiber, silica, mica, alumina, clay, calcium carbonate, calcium sulfate, or glass beads. Examples of the nucleating agent may include talc or clay.

The additives may be properly added as long as properties of the polycarbonate resin composition are not deteriorated. The additives may be present in an amount of 40 parts by weight or less based on 100 parts by weight of the polycarbonate resin composition. In one embodiment, the additives may be present in an amount of 0.1 to 30 parts by weight.

The polycarbonate resin composition has excellent scratch resistance and mar resistance, which is resistance to fine scratches, realizes high gloss texture while maintaining transparency, has excellent property balance between color reproducibility, impact resistance, heat resistance, gloss, scratch resistance, and transparency. Further, polycarbonate resin composition is properly used as a non-coating material. Further, when products requiring high gloss and non-coating are manufactured using the polycarbonate resin composition, a coating process is not needed, thereby remarkably reducing costs and providing environmentally friendly effects.

The polycarbonate resin composition has excellent intrinsic impact strength and thus need not include an impact reinforcing agent or a rubber component. The rubber component includes rubber modified copolymers, such as ABS, MABS, AES, and AAS. When the resin composition includes the impact reinforcing agent or the rubber component, its transparency can be reduced.

The polycarbonate resin composition may be prepared by any known method of preparing a resin composition. For example, the above components and the other additives are mixed at the same time, subjected to melt extrusion in an extruder, and formed into pellets.

Another aspect of the present invention provides a molded article using the polycarbonate resin composition. That is, the polycarbonate resin composition may be formed into molded articles via various processes, such as injection molding, blow molding, extrusion molding, and heat molding. In particular, the composition is useful for molded articles, e.g., electric and electronic components and automobile components requiring impact resistance, scratch resistance, transparency, and heat resistance.

Hereinafter, the constitution and functions of the present invention will be explained in more detail with reference to the following examples. These examples are provided for illustration only and are not to be in any way construed as limiting the present invention.

### Examples

Details of components used in Examples and Comparative Examples are described as follows.

### (A) Polycarbonate resin

Infino having an MFI of 8 g/10min at 310°C and 1.2 kgf produced by Cheil Industries Inc. is used.

### (B) Polycarbonate-polysiloxane

Tarflon produced by Idemitsu Chemicals is used.

### (C) Polyalkylaryl siloxane

(C-1) TSF437 having a refractive index of 1.499 produced by GE Toshiba Silicones is used.
(C-2) SILREN M1010 having a refractive index of 1.529 produced by Korea Biogen Co., Ltd. is used.
(C') Fatty acid ester, Unister H-476, produced by NOF Corporation is used.
(C") Amino terminated polysiloxane, XF42-C2999, having a refractive index 1.406 produced by GE Toshiba Silicones is used.

### (D) Modified (meth)acrylic copolymer resin

A copolymer having a weight average molecular weight of 20,000 g/mol prepared by general suspension polymerization of 65 wt% of methyl methacrylate and 35 wt% of phenyl methacrylate is used.

### (E) Fatty acid amide surface conditioning agent

Oleamide, Finawax OK, produced by Fine Chemicals Inc. is used.

### (F) Syndiotactic polystyrene

Syndiotactic polystyrene, Zarex 130ZC, produced by Idemitsu Chemicals is used.

### Examples 1 to 10 and Comparative Examples 1 to 6

The above components were mixed according to compositions listed in Table 1, and 0.2 parts by weight of carbon black was added thereto, followed by extrusion using a 45 Φ twin screw extruder and drying in a dryer at 100°C for 4 hours to prepare pellets. The pellets were dried at 80°C for 4 hours and subjected to injection-molding to prepare ASTM dumbbell specimens using a 6 oz injection molding machine at a cylinder temperature of 210°C to 230°C, a mold temperature of 100° C, and a molding cycle of 30 seconds. Physical properties of the specimens were measured as follows and results are shown in Tables 1 to 3.

### (1) Blackness

L value was measured based on ASTM D1925 using Konica Minolta CCM.

### (2) Notched-IZOD impact strength

Notched-IZOD was measured using a specimen having a thickness of 1/8" according to ASTM D256 (kgf·cm /cm).

### (3) Ball type scratch profile (BSP) width

A load of 1 kgf was applied to a specimen using a tungsten carbide stylus having a spherical tip with a diameter of 0.7 mm and a scratch was formed on the specimen at a speed of 75 mm/min, followed by observation of profile and measurement of scratch width using a surface profiler (µm).

### (4) Gate impact

After injection-molding a pin point 2T specimen, a load of 2 kgf was applied to a gate portion of the specimen by free fall using a metal tip having a diameter of 10 mm, thereby measuring impact resistance on the gate portion (%).

### (5) Mar resistance

A specimen was rubbed 500 times using a superfine fiber cloth, followed by observation of appearance using an abrasion rubbing tester.
1: Best
3: Good
5: Moderate
7: Bad
9: Worst

**TABLE 1**

| | | Example 1 | Example 2 | Example 3 | Comparative Example 1 | Comparative Example 2 |
|---|---|---|---|---|---|---|
| (A) PC | | 40 | 40 | 40 | 40 | 40 |
| (B) PC-Si | | 40 | 40 | 40 | 40 | 40 |
| (C-1) | | 1 | - | 1 | - | - |
| (C-2) | | - | 1 | - | - | - |
| (C') | | - | - | - | - | 1 |
| (D) Modified PMMA | | 20 | 20 | 20 | 20 | 20 |
| (E) Fatty acid amide | | - | - | 1 | - | - |
| Blackness(L value) | - | 25 | 25 | 25 | 25 | 25 |
| N-IZ (1/8") | kg·cm/cm | 4.5 | 4.5 | 2.5 | 4.5 | 3.0 |
| BSP width | *µ*m | 255 | 255 | 255 | 255 | 255 |
| Mar resistance | Grade | 4 | 4 | 6 | 9 | 9 |

As shown in Table 1, the polycarbonate resin compositions including polyalkylaryl siloxane according to Examples 1 to 3 have remarkably improved mar resistance as compared with those according to Comparative Examples 1 and 2.

**TABLE 2**

| | | Example 4 | Example 5 | Example 6 | Comparative Example 3 | Comparative Example 4 |
|---|---|---|---|---|---|---|
| (A)PC | | 75 | 75 | 75 | 75 | 75 |
| (B)PC-Si | | 25 | 25 | 25 | 25 | 25 |
| (C-1) | | 1 | - | - | - | - |
| (C-2) | | - | 1 | 1 | - | - |
| (C') | | - | - | - | - | 1 |
| (E) Fatty acid amide | | - | - | 1 | - | - |
| Blackness (L value) | - | 25 | 25 | 25 | 25 | 25 |
| N-IZ (1/8") | kg·cm/cm | 80 | 80 | 10 | 80 | 12 |
| Gate impact destruction rate | % | 20%↓ | 0% | 100% | 0% | 100% |
| Mar resistance | Grade | 4 | 4 | 6 | 9 | 9 |

As shown in Table 2, the polycarbonate resin compositions including polyalkylaryl siloxane according to Examples 4 to 6 have remarkably improved mar resistance as compared with those according to Comparative Examples 3 and 4. Fig. 1 shows photographs of the specimens of Example 4 and Comparative Example 4 after a gate impact test. As shown in Fig. 1, for Comparative Example 4, the polycarbonate resin composition including a fatty acid ester lubricant instead of a siloxane surface conditioning agent has seriously reduced impact resistance.

**TABLE 3**

| | | Example 7 | Example 8 | Example 9 | Example 10 | Comparative Example 4 | Comparative Example 5 | Comparative Example 6 |
|---|---|---|---|---|---|---|---|---|
| (A) PC | | 40 | 75 | 75 | 75 | 75 | 75 | 75 |
| (B) PC-Si | | 40 | 25 | 25 | 25 | 25 | 25 | 25 |
| (C-1) | | 2 | 2 | 2 | 2 | - | - | - |
| (C') | | - | - | - | - | 1 | - | - |
| (C") | | - | - | - | - | - | 2 | - |
| (D)Modified PMMA | | 20 | - | - | - | - | - | - |
| (F) sPS | | - | - | 1 | 2 | - | - | 2 |
| Blackness (L value) | - | 25 | 25 | 25 | 25 | 25 | 28 | 25 |
| N-IZ (1/8") | kg·cm/cm | 4.5 | 80 | 80 | 80 | 12 | 80 | 12 |
| BSP width | µm | 255 | 320 | 320 | 320 | 320 | 320 | 320 |
| Gate impact destruction rate | % | 100% | 20%↓ | 10%↓ | 0% | 100% | 20%↓ | 0% |
| Mar resistance | Grade | 3 | 3 | 3 | 3 | 9 | 7 | 9 |

As shown in Table 3, when the amount of the surface conditioning agent is increased, mar resistance is further improved. Further, for Comparative Example 5, the polycarbonate resin composition prepared using siloxane having low refractive index has reduced blackness, causing deterioration of the appearance thereof.

Although some embodiments have been disclosed herein, it should be understood by those skilled in the art that these embodiments are provided by way of illustration only, and that various modifications, changes, and alterations can be made without departing from the scope of the invention. Therefore, the scope of the invention should be limited only by the accompanying claims and equivalents thereof.

## Claims

1. A polycarbonate resin composition having high gloss and impact resistance and good surface properties, comprising:
100 parts by weight of a base resin including a polycarbonate resin (A) and a polycarbonate-polysiloxane copolymer (B); and
about 0.1 to 10 parts by weight of polyalkylaryl siloxane (C) having a refractive index of 1.42 to 1.59;
wherein the polycarbonate resin (A) is present in an amount of 30 to 90 wt% based on 100 wt% of the base resin;
wherein the polyalkylaryl siloxane (C) has a repeat unit represented by Formula 3: 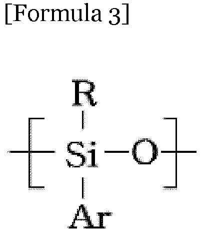
wherein R represents a substituted or unsubstituted C1 to C6 alkyl group, and
Ar represents a substituted or unsubstituted C6 to C12 aryl group.

2. The polycarbonate resin composition of claim 1, wherein said polycarbonate-polysiloxane copolymer (B) comprises 1 to 99 wt% of a polycarbonate block and 1 to 99 wt% of a polysiloxane block.

3. The polycarbonate resin composition of claim 1 or 2, wherein said base resin further comprises 40 wt% or less of a modified (meth)acrylic copolymer resin.

4. The polycarbonate resin composition of claim 3, wherein said modified (meth)acrylic copolymer resin has a refractive index of 1.495 to 1.590.

5. The polycarbonate resin composition of any of claims 1 to 4, wherein said modified (meth)acrylic copolymer resin is an aromatic or alicyclic (meth)acrylate polymer.

6. The polycarbonate resin composition of claim 5, wherein said modified (meth)acrylic copolymer resin is a polymer including 20 to 100 wt% of an aromatic or alicyclic (meth)acrylate having a structure represented by Formula 4 or 5 (d1) and 0 to 80 wt% of a monofunctional unsaturated monomer (d2): 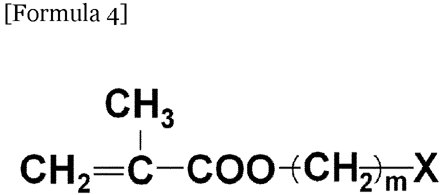 where m represents an integer from 0 to 10, and X is selected from the group consisting of a cyclohexyl group, a phenyl group, a methylphenyl group, a methylethylphenyl group, a propylphenyl group, a methoxyphenyl group, a cyclohexylphenyl group, a chlorophenyl group, a bromophenyl group, a phenyphenyl group and a benzylphenyl group, and 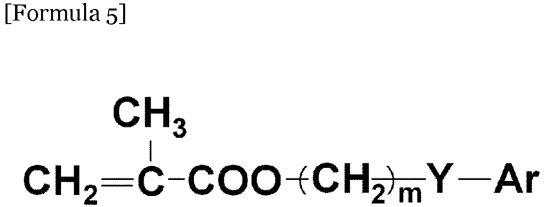 where m represents an integer from 0 to 10, Y represents oxygen (O) or sulfur (S), and Ar is selected from the group consisting of a cyclohexyl group, a phenyl group, a methylphenyl group, a methylethylphenyl group, a methoxyphenyl group, a cyclohexylphenyl group, a chlorophenyl group, a bromophenyl group, a phenylphenyl group and a benzylphenyl group.

7. The polycarbonate resin composition of claim 6, wherein said monofunctional unsaturated monomer (d2) comprises at least one selected from the group consisting of (meth)acrylic acid esters, unsaturated carboxylic acid, acid anhydrides, hydroxyl group containing ester, amides, nitriles, allyl glycidyl ether, glycidyl methacrylate, and a styrene monomer.

8. The polycarbonate resin composition of any of claims 1 to 7, wherein said polycarbonate resin composition further comprises 0.1 to 5 parts by weight of a fatty acid amide surface conditioning agent based on 100 parts by weight of the base resin.

9. The polycarbonate resin composition of any of claims 1 to 8, wherein said polycarbonate resin composition further comprises 5 parts by weight or less of syndiotactic polystyrene based on 100 parts by weight of the base resin.

10. The polycarbonate resin composition of any of claims 1 to 9, wherein said resin composition further comprises at least one additive selected from the group consisting of an antimicrobial agent, a heat stabilizer, an antioxidant, a release agent, a photostabilizer, an inorganic additive, a surfactant, a coupling agent, a plasticizer, an admixture, a stabilizer, a lubricant, an anti-static agent, a toning agent, a fire-proofing agent, a weather-proofing agent, a coloring agent, a UV absorbent, a UV blocking agent, a flame retardant, fillers, a nucleating agent, adhesion aids, and adhesives.

11. A molded article obtainable from the polycarbonate resin composition of claim 1.

## Patentansprüche

1. Polycarbonatharzzusammensetzung mit hoher Glanz- und Schlagbeständigkeit und guten Oberflächeneigenschaften, umfassend:
100 Gewichtsteile eines Basisharzes, das ein Polycarbonatharz (A) und ein Polycarbonat-Polysiloxan-Copolymer (B) einschließt; und
etwa 0,1 bis 10 Gewichtsteile Polyalkylarylsiloxan (C) mit einem Brechungsindex von 1,42 bis 1,59;
wobei das Polycarbonatharz (A) in einer Menge von 30 bis 90 Gew.-%, bezogen auf 100 Gew.-% des Basisharzes, vorliegt;
wobei das Polyalkylarylsiloxan (C) eine durch Formel 3 dargestellte Wiederholungseinheit aufweist: 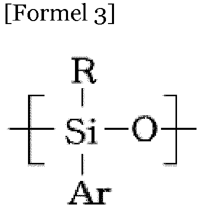 wobei R eine substituierte oder unsubstituierte C1- bis C6-Alkylgruppe darstellt, und Ar eine substituierte oder unsubstituierte C6- bis C12-Arylgruppe darstellt.

2. Polycarbonatharzzusammensetzung nach Anspruch 1, wobei das Polycarbonat-Polysiloxan-Copolymer (B) 1 bis 99 Gew.-% eines Polycarbonatblocks und 1 bis 99 Gew.-% eines Polysiloxanblocks umfasst.

3. Polycarbonatharzzusammensetzung nach Anspruch 1 oder 2, wobei das Basisharz ferner 40 Gew.-% oder weniger eines modifizierten (Meth)acrylcopolymerharzes umfasst.

4. Polycarbonatharzzusammensetzung nach Anspruch 3, wobei das modifizierte (Meth)acrylcopolymerharz einen Brechungsindex von 1,495 bis 1,590 aufweist.

5. Polycarbonatharzzusammensetzung nach irgendeinem der Ansprüche 1 bis 4, wobei das modifizierte (Meth)acrylcopolymerharz ein aromatisches oder alicyclisches (Meth)acrylatpolymer ist.

6. Polycarbonatharzzusammensetzung nach Anspruch 5, wobei das modifizierte (Meth)acrylcopolymerharz ein Polymer ist, das 20 bis 100 Gew.-% eines aromatischen oder alicyclischen (Meth)acrylats mit einer durch Formel 4 oder 5 dargestellten Struktur (d1) und 0 bis 80 Gew.-% eines monofunktionellen ungesättigten Monomers (d2) einschließt: 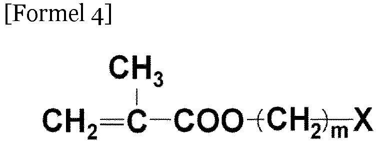 wobei m eine ganze Zahl von 0 bis 10 darstellt und X ausgewählt ist aus der Gruppe bestehend aus einer Cyclohexylgruppe, einer Phenylgruppe, einer Methylphenylgruppe, einer Methylethylphenylgruppe, einer Propylphenylgruppe, einer Methoxyphenylgruppe, einer Cyclohexylphenylgruppe, einer Chlorphenylgruppe, einer Bromphenylgruppe, einer Phenyphenylgruppe und einer Benzylphenylgruppe, und 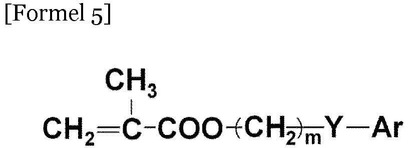 wobei m eine ganze Zahl von 0 bis 10 darstellt, Y Sauerstoff (O) oder Schwefel (S) darstellt, und Ar ausgewählt ist aus der Gruppe bestehend aus einer Cyclohexylgruppe, einer Phenylgruppe, einer Methylphenylgruppe, einer Methylethylphenylgruppe, einer Methoxyphenylgruppe, einer Cyclohexylphenylgruppe, einer Chlorphenylgruppe, einer Bromphenylgruppe, einer Phenylphenylgruppe und einer Benzylphenylgruppe.

7. Polycarbonatharzzusammensetzung nach Anspruch 6, wobei das monofunktionelle ungesättigte Monomer (d2) mindestens eines umfasst, ausgewählt aus der Gruppe bestehend aus (Meth)acrylsäureestern, ungesättigter Carbonsäure, Säureanhydriden, Hydroxylgruppe enthaltendem Ester, Amiden, Nitrilen, Allylglycidylether, Glycidylmethacrylat und einem Styrolmonomer.

8. Polycarbonatharzzusammensetzung nach irgendeinem der Ansprüche 1 bis 7, wobei die Polycarbonatharzzusammensetzung ferner 0,1 bis 5 Gewichtsteile eines Fettsäureamid-Oberflächenkonditionierungsmittels, bezogen auf 100 Gewichtsteile des Basisharzes, umfasst.

9. Polycarbonatharzzusammensetzung nach irgendeinem der Ansprüche 1 bis 8, wobei die Polycarbonatharzzusammensetzung ferner 5 Gewichtsteile oder weniger syndiotaktisches Polystyrol, bezogen auf 100 Gewichtsteile des Basisharzes, umfasst.

10. Polycarbonatharzzusammensetzung nach irgendeinem der Ansprüche 1 bis 9, wobei die Harzzusammensetzung ferner mindestens ein Additiv umfasst, ausgewählt aus der Gruppe bestehend aus einem antimikrobiellen Mittel, einem Wärmestabilisator, einem Antioxidationsmittel, einem Trennmittel, einem Photostabilisator, einem anorganischen Additiv, einem Tensid, einem Kupplungsmittel, einem Weichmacher, einer Beimischung, einem Stabilisator, einem Schmiermittel, einem Antistatikmittel, einem Tonisierungsmittel, einem Brandschutzmittel, einem Wetterschutzmittel, einem Farbstoff, einem UV-Absorptionsmittel, einem UV-Blockierungsmittel, einem Flammschutzmittel, Füllstoffen, einem Keimbildner, Hafthilfen und Klebstoffen.

11. Formgegenstand, erhältlich aus der Polycarbonatharzzusammensetzung nach Anspruch 1.

## Revendications

1. Composition de résine de polycarbonate ayant un brillant et une résistance au choc élevés et de bonnes propriétés de surface, comprenant :
100 parties en poids d'une résine de base contenant une résine de polycarbonate (A) et un copolymère polycarbonate-polysiloxane (B) ; et
environ 0,1 à 10 parties en poids d'un polyalkylarylsiloxane (C) ayant un indice de réfraction de 1,42 à 1,59 ;
dans laquelle la résine de polycarbonate (A) est présente en une quantité de 30 à 90 % en poids pour 100 % en poids de la résine de base ;
dans laquelle le polyalkylarylsiloxane (C) possède un motif répétitif représenté par la formule 3 : 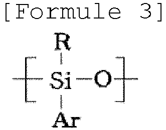 dans laquelle R représente un groupe alkyle en C₁ à C₆ substitué ou non substitué, et Ar représente un groupe aryle en C₆ à C₁₂ substitué ou non substitué.

2. Composition de résine de polycarbonate selon la revendication 1, dans laquelle ledit copolymère polycarbonate-polysiloxane (B) comprend 1 à 99 % en poids d'un bloc polycarbonate et 1 à 99 % en poids d'un bloc polysiloxane.

3. Composition de résine de polycarbonate selon la revendication 1 ou 2, dans laquelle ladite résine de base comprend en outre 40 % en poids ou moins d'une résine d'un copolymère (méth)acrylique modifié.

4. Composition de résine de polycarbonate selon la revendication 3, dans laquelle ladite résine d'un copolymère (méth)acrylique modifié a un indice de réfraction de 1,495 à 1,590.

5. Composition de résine de polycarbonate selon l'une des revendications 1 à 4, dans laquelle ladite résine d'un copolymère (méth)acrylique modifié est un polymère de (méth)acrylate aromatique ou alicyclique.

6. Composition de résine de polycarbonate selon la revendication 5, dans laquelle ladite résine d'un copolymère (méth)acrylique modifié est un polymère contenant 20 à 100 % en poids d'un (méth)acrylate aromatique ou alicyclique ayant une structure représentée par la Formule 4 ou 5 (d₁) et 0 à 80 % en poids d'un monomère insaturé monofonctionnel (d₂) : 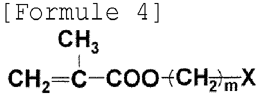 dans laquelle m représente un entier de 0 à 10, et X est choisi dans le groupe consistant en un groupe cyclohexyle, un groupe phényle, un groupe méthylphényle, un groupe méthyléthylphényle, un groupe propylphényle, un groupe méthoxyphényle, un groupe cyclohexylphényle, un groupe chlorophényle, un groupe bromophényle, un groupe phénylphényle et un groupe benzylphényle, et 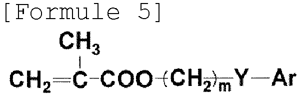 dans laquelle m représente un entier de 0 à 10, Y représente un oxygène (O) ou un soufre (S), et Ar est choisi dans le groupe consistant en un groupe cyclohexyle, un groupe phényle, un groupe méthylphényle, un groupe méthyléthylphényle, un groupe méthoxyphényle, un groupe cyclohexylphényle, un groupe chlorophényle, un groupe bromophényle, un groupe phénylphényle et un groupe benzylphényle.

7. Composition de résine de polycarbonate selon la revendication 6, dans laquelle ledit monomère insaturé monofonctionnel (d₂) comprend au moins un monomère choisi dans le groupe consistant en les esters de l'acide (méth)acrylique, un acide carboxylique insaturé, les anhydrides d'acide, un ester contenant un groupe hydroxyle, les amides, les nitriles, l'allylglycidyléther, le méthacrylate de glycidyle et un monomère styrénique.

8. Composition de résine de polycarbonate selon l'une des revendications 1 à 7, ladite composition de résine de polycarbonate comprenant en outre 0,1 à 5 parties en poids d'un agent de conditionnement de surface de type amide d'acide gras, pour 100 parties en poids de la résine de base.

9. Composition de résine de polycarbonate selon l'une des revendications 1 à 8, ladite composition de résine de polycarbonate comprenant en outre 5 parties en poids ou moins d'un polystyrène syndiotactique, pour 100 parties en poids de la résine de base.

10. Composition de résine de polycarbonate selon l'une des revendications 1 à 9, ladite composition de résine comprenant en outre au moins un additif choisi dans le groupe consistant en un agent antimicrobien, un thermostabilisant, un antioxydant, un agent de démoulage, un photostabilisant, un additif inorganique, un tensioactif, un agent de couplage, un plastifiant, un adjuvant, un stabilisant, un lubrifiant, un agent antistatique, un agent de nuançage, un agent d'ignifugation, un agent de résistance aux intempéries, un agent colorant, un absorbant UV, un agent absorbant les UV, un retardateur de flamme, des charges, un agent de nucléation, des auxiliaires d'adhérence et des adhésifs.

11. Article moulé pouvant être obtenu à partir de la composition de résine de polycarbonate selon la revendication 1.
